# DEMANDE DE BREVET EUROPEEN

(11) **EP 4 036 437 A1**
(43) Date de publication de la demande: **03.08.2022**
(21) Numéro de dépôt: 22152506.6
(22) Date de dépôt: 20.01.2022
(51) Int. Cl.: F16F 15/12, F16F 15/129, F16D 3/79

(54) **DISPOSITIF D'AMORTISSEMENT VIBRATOIRE**

(30) Priorité: 29.01.2021 FR 2100862
(71) Demandeur: VALEO EMBRAYAGES, 80009 Amiens (FR)
(72) Inventeur: DAEL, Dominique, 80000 Amiens (FR); COUTURIER, Benoit, 80000 AMIENS (FR); BOUDIN, Jerome, 80000 Amiens (FR)
(74) Mandataire: Valeo Powertrain Systems

(57) **Abrégé**

L'invention concerne un dispositif d'amortissement vibratoire (10) pour une transmission de véhicule automobile, comprenant :
- un voile de transmission de couple (20) ;
- deux éléments de guidage (30) liés en rotation, coaxiaux suivant un axe (X) et disposés de part et d'autre dudit voile de transmission de couple (20) ;
- des ressorts hélicoïdaux de compression (11) en appui sur le voile de transmission de couple et les éléments de guidage ;
dans lequel un disque (40) de reprise des désalignements axiaux de la transmission est rapporté sur le voile de transmission de couple (20) par l'intermédiaire de six zones de fixation (41) uniformément réparties angulairement autour de l'axe (X), ledit disque étant agencé pour être fixé sur un volant d'inertie.

## Description

La présente invention se rapporte à un dispositif d'amortissement vibratoire pour une transmission d'engin motorisé. L'engin motorisé peut être un véhicule automobile, un motocycle ou tout autre véhicule comprenant au moins un moteur thermique. Le véhicule automobile peut être un véhicule dit industriel, ce dernier étant par exemple un poids lourd, un véhicule de transport en commun, ou un véhicule agricole.

Plus précisément, l'invention concerne un perfectionnement au dispositif d'amortissement vibratoire pour lequel un disque de reprise des désalignements axiaux est disposé entre le volant d'inertie du moteur thermique et la boite de vitesses.

Dans le cadre d'un véhicule automobile équipé d'une motorisation hybride, la transmission comprend généralement un moteur thermique, une boite de vitesses, un mécanisme d'accouplement reliant le moteur thermique à la boite de vitesses et un moteur électrique accouplé à la transmission. Ainsi, le véhicule peut fonctionner tantôt avec le moteur thermique, tantôt avec le moteur électrique ou parfois simultanément avec les deux moteurs électrique et thermique.

Un dispositif d'amortissement vibratoire est parfois nécessaire pour filtrer en amont de la boite de vitesses les acyclismes en provenance du moteur thermique. Ce dispositif d'amortissement vibratoire est généralement implanté directement sur le volant d'inertie du moteur thermique et est raccordé à un arbre d'entrée de la boite de vitesses. Ce type d'implantation pose généralement un problème de raccordement cinématique entre la sortie du dispositif et l'arbre de la boite de vitesses. Etant donné le nombre important de composants utilisés au sein de cette transmission, la tolérance géométrique de positionnement des arbres d'entrée et de sortie est grande et même amplifiée par l'utilisation d'une machine électrique tournante. Le dispositif d'amortissement vibratoire a notamment pour fonction de compenser les différences de position entre l'arbre de sortie lié au moteur thermique et l'arbre d'entrée lié à la boîte de vitesses.

Egalement, lors de l'utilisation du moteur thermique, la rotation du vilebrequin transmet au dispositif d'amortissement vibratoire des vibrations axiales et/ou de flexion par l'intermédiaire du volant d'inertie. Les débattements axiaux mesurés sur la périphérie externe du volant d'inertie peuvent atteindre des valeurs crêtes - crêtes de l'ordre de plusieurs millimètres. Le dispositif d'amortissement vibratoire a également pour fonction de réduire ces vibrations axiales pour éviter d'endommager la boite de vitesses.

L'invention vise à remédier à ces problèmes techniques en proposant un dispositif d'amortissement vibratoire perfectionné capable de compenser les tolérances axiales et angulaires ainsi que d'amortir les débattements axiaux du volant d'inertie de façon bien meilleure que dans l'art antérieur.

L'invention a également pour but d'apporter une solution simple, efficace et économique à ces problèmes.

Un autre but de l'invention est de fournir un dispositif d'amortissement vibratoire capable de transmettre le couple en provenance du volant d'inertie à l'arbre d'entrée de la boite de vitesses de manière fiable.

A cet effet, la présente invention propose un dispositif d'amortissement vibratoire pour une transmission d'engin motorisé, comprenant :
- un voile de transmission de couple ;
- deux éléments de guidage liés en rotation, coaxiaux suivant un axe de rotation X et disposés de part et d'autre dudit voile de transmission de couple ;
- des ressorts hélicoïdaux de compression en appui directement ou indirectement sur le voile de transmission de couple et les éléments de guidage ;
dans lequel un disque de reprise des désalignements axiaux de la transmission est rapporté sur le voile de transmission de couple ou sur l'un des éléments de guidage par l'intermédiaire de zones de fixation réparties angulairement autour de l'axe X et agencé pour être fixé sur un volant d'inertie par l'intermédiaire de zones d'ancrage réparties angulairement autour de l'axe X ;
dans lequel chaque zone d'ancrage est raccordée à au moins deux zones de fixation par des bras de liaison distincts.

Ce dispositif d'amortissement vibratoire, selon l'invention, présente l'avantage de compenser les tolérances axiales et angulaires mais aussi d'amortir les débattements axiaux du volant d'inertie en raison de la souplesse axiale des bras de liaison selon l'axe X. Grace à la géométrie particulière du disque de reprise des désalignements axiaux, le dispositif d'amortissement vibratoire est flexible. Le couple est également transmis de manière efficace par l'intermédiaire des différents bras de liaison disposés entre les zones d'ancrage et les zones de fixation.

Par « tolérances axiales et angulaire » on entend selon l'invention tolérances axiales et radiales au niveau du positionnement relatif du moteur thermique et de la boîte de vitesses.

De préférence, le disque de reprise des désalignements axiaux peut comprendre des crevés formés par l'enchevêtrement des bras de liaison. Le disque de reprise des désalignements axiaux est ainsi ajouré de manière à le rendre souple sans affecter sa résistance mécanique sous couple. Le choix d'ajourer à certains endroits du disque plutôt qu'à d'autres endroits est le résultat d'une étude de topologie consistant à déterminer les chemins de passage de couple privilégiés lorsque le dispositif d'amortissement vibratoire transmet le couple moteur vers la boite de vitesses. Les chemins de passage de couple sont sensiblement linéaires. Une fois ces chemins de passage de couple déterminés, des crevés sont ménagés aux endroits où le couple ne passe pas en vue d'assouplir le disque sans le fragiliser. Géométriquement, le disque se distingue alors par la présence de bras de liaison disposés entre les zones d'ancrage et les zones de fixation. La résistance mécanique sous couple du disque de reprise des désalignements axiaux comprenant des bras de liaison est proche de celle d'un disque plein non ajouré.

Avantageusement, les bras de liaison issus d'une même zone d'ancrage peuvent s'étendre dans des directions angulaires distinctes de manière à rejoindre leurs zones de fixation correspondantes. Les bras de liaison sont distincts les uns des autres et transmettent le couple au voile de transmission de couple ou à l'un des éléments de guidage de manière indépendante.

De préférence, les zones d'ancrage du disque associées au volant d'inertie peuvent être disposées sur un diamètre d'implantation D supérieur au diamètre d'implantation d des zones de fixation associées au voile de transmission de couple ou à l'un des éléments de guidage.

Selon une variante, le disque de reprise des désalignements axiaux peut être fixé sur le voile de transmission de couple par l'intermédiaire d'une liaison rivetée comprenant une série de rivets disposés dans des orifices de fixation du disque et dans des trous correspondant du voile de transmission de couple.

Selon une autre variante, le disque de reprise des désalignements axiaux peut être fixé sur l'élément de guidage par l'intermédiaire d'une liaison rivetée comprenant une série de rivets disposés dans des orifices de fixation du disque et dans des trous correspondant de l'élément de guidage.

De préférence, le disque de reprise des désalignements axiaux peut comprendre, dans un plan perpendiculaire à l'axe X, deux axes de raideur minimale en flexion, les axes de raideur minimale en flexion étant perpendiculaires entre eux et l'un des deux axes passant par deux zones de fixation opposées angulairement par rapport à l'axe de rotation X.

Avantageusement, le disque de reprise des désalignements axiaux peut comprendre, dans un plan perpendiculaire à l'axe de rotation X, deux axes de symétrie perpendiculaires entre eux. Les deux axes de symétrie peuvent correspondre aux axes de raideur minimale en flexion.

Avantageusement, la raideur du disque selon un des axes de raideur minimale en flexion peut être inférieure à la raideur du disque selon l'autre axe de raideur minimale en flexion.

De préférence, une des zones d'ancrage du disque associée au volant d'inertie peut être décalée d'un angle compris entre 5 et 25 degrés par rapport à un axe passant par deux zones de fixation opposées angulairement par rapport à l'axe de rotation X, par exemple décalée d'un angle de 15 degrés. Le décalage de 15 degrés de l'axe a pour effet d'augmenter le nombre de bras de liaison et d'augmenter la capacité de transmission de couple du disque.

Avantageusement, le voile de transmission de couple peut comprendre des fenêtres de réception de ressorts hélicoïdaux de compression, les zones de fixation du disque étant réparties angulairement entre chaque fenêtre de réception. De cette manière, la répartition des contraintes mécaniques au sein du disque est sensiblement uniforme sur le pourtour du voile de transmission de couple.

De préférence, le dispositif d'amortissement vibratoire peut comprendre un moyeu de sortie de couple, les éléments de guidage sont liées en rotation au moyeu de sortie de couple. Les éléments de guidage peuvent être liées en rotation au moyeu de sortie de couple par l'intermédiaire de rivets, ou d'une soudure.

Par exemple, les éléments de guidage peuvent être des rondelles de guidage formées à partir d'une tôle emboutie.

Selon un mode de réalisation de l'invention, l'appui des ressorts hélicoïdaux de compression peut se faire indirectement sur des fenêtres du voile de transmission de couple et sur des fenêtres des rondelles de guidage par l'intermédiaire de moyens d'interfaçage disposés sur les deux parties coaxiales, les moyens d'interfaçage comprenant par exemple des sièges de ressort placés aux extrémités des ressorts hélicoïdaux de compression.

Selon un autre mode de réalisation de l'invention, le dispositif d'amortissement vibratoire peut comprendre un moyeu de sortie de couple disposé radialement à l'intérieur du voile de transmission de couple et des deux éléments de guidage, un dispositif additionnel de reprise des désalignements comprenant un moyeu central inséré dans le moyeu de sortie de couple et au moins un sous-ensemble de frottement lié cinématiquement conjointement aux deux moyeux.

L'invention peut présenter l'une ou l'autre des caractéristiques décrites ci-dessous combinées entre elles ou prises indépendamment les unes des autres :
- les zones de fixation peuvent être uniformément réparties angulairement autour de l'axe X ;
- le disque de reprise des désalignements axiaux peut comprendre un nombre pair de zones de fixation ;
- le disque de reprise des désalignements axiaux peut comprendre un nombre impair de zones de fixation ;
- le disque de reprise des désalignements axiaux peut comprendre six zones de fixation uniformément réparties angulairement autour de l'axe X selon un angle de 60 degrés ;
- les zones d'ancrage peuvent être uniformément réparties angulairement autour de l'axe X ;
- le disque de reprise des désalignements axiaux peut comprendre un nombre pair de zones d'ancrage ;
- le disque de reprise des désalignements axiaux peut comprendre un nombre impair de zones d'ancrage ;
- le disque de reprise des désalignements axiaux peut comprendre quatre zones d'ancrage uniformément réparties angulairement autour de l'axe X selon un angle de 90 degrés ;
- le nombre de zones d'ancrage peut être inférieur au nombre de zones de fixation ;
- le nombre de zones d'ancrage peut être supérieur au nombre de zones de fixation ;
- une zone d'ancrage du disque peut comprendre au moins un orifice d'ancrage ;
- une zone d'ancrage du disque peut comprendre plusieurs orifices d'ancrage décalés angulairement entre eux autour de l'axe X, par exemple par un angle de 15 degrés ;
- les orifices d'ancrage d'une même zone d'ancrage peuvent être décalés angulairement entre eux autour de l'axe X, par exemple par un angle compris entre 10 et 45 degrés ;
- par exemple, chaque zone d'ancrage du disque peut comprendre trois orifices d'ancrage, les orifices d'ancrage d'une même zone d'ancrage sont décalés angulairement entre eux autour de l'axe X par un angle de 15 degrés.
- chacune des zones de fixation du disque peut comprendre au moins un orifice de fixation, par exemple deux orifices de fixation ;
- les bras de liaison peuvent comprendre au moins en partie dans un plan P parallèle à l'axe X une section de matière d'épaisseur E et de largeur L telle que le ratio L / E est supérieur à 10 ;
- le bras de liaison peut comprendre une épaisseur E variable sur tout ou partie de l'étendue du bras de liaison ;
- le bras de liaison peut comprendre une largeur L variable surtout ou partie de l'étendue du bras de liaison ;
- le disque de reprise des désalignements axiaux peut être formé à partir d'une tôle emboutie, par exemple une tôle d'acier.
- les zones d'ancrage du disque peuvent être disposées sur un diamètre d'implantation D supérieur au diamètre extérieur des deux éléments de guidage.

Selon un mode de réalisation particulièrement avantageux, chaque zone d'ancrage peut être raccordée à trois zones de fixation par trois bras de liaison distincts, les bras de liaison issus d'une même zone d'ancrage s'étendent dans des directions angulaires distinctes de manière à rejoindre leurs zones de fixation correspondantes.

Selon un autre mode de réalisation particulièrement avantageux, des zones d'ancrage peuvent être raccordées à deux zones de fixation par des bras de liaison distincts, les bras de liaison issus d'une même zone d'ancrage s'étendent dans des directions angulaires distinctes de manière à rejoindre leurs zones de fixation correspondantes.

Selon un autre mode de réalisation, chaque orifice d'ancrage peut être raccordé à deux zones de fixation par des bras de liaison distincts, les bras de liaison issus d'un même orifice d'ancrage s'étendent dans des directions angulaires distinctes de manière à rejoindre leurs zones de fixation correspondantes.

L'invention a également pour objet, selon un autre de ses aspects, un sous-ensemble de transmission pour une transmission d'engin motorisé, comprenant :
- un volant d'inertie,
- un dispositif d'amortissement vibratoire reprenant tout ou partie des caractéristiques mentionnées précédemment, fixé sur le volant d'inertie, et
- des vis de fixation insérées dans les zones d'ancrage du dispositif d'amortissement vibratoire et vissées sur le volant d'inertie.

Ce sous-ensemble de transmission, selon cet autre aspect de l'invention, présente l'avantage de pouvoir être préassemblé en usine avant sa livraison au client.

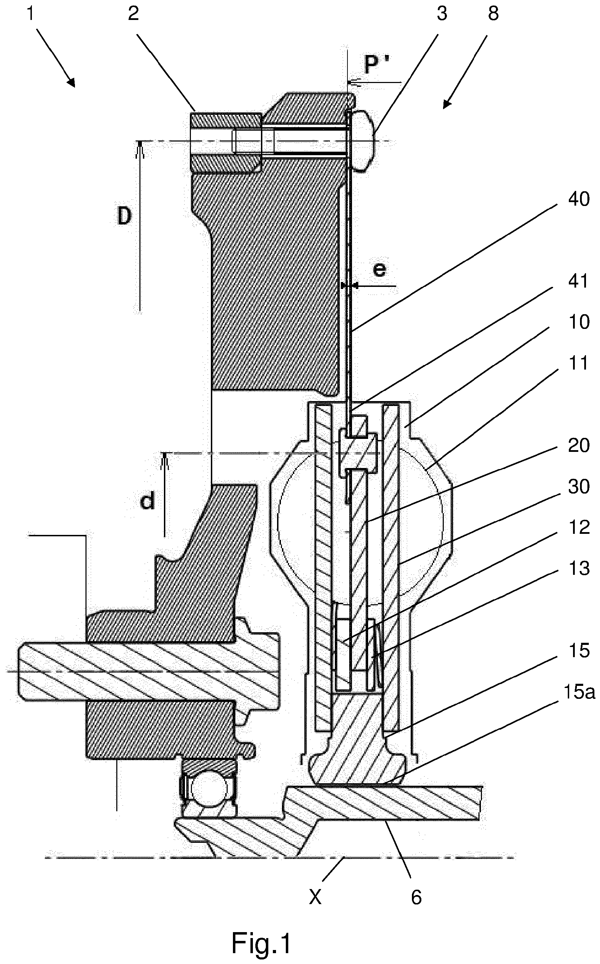

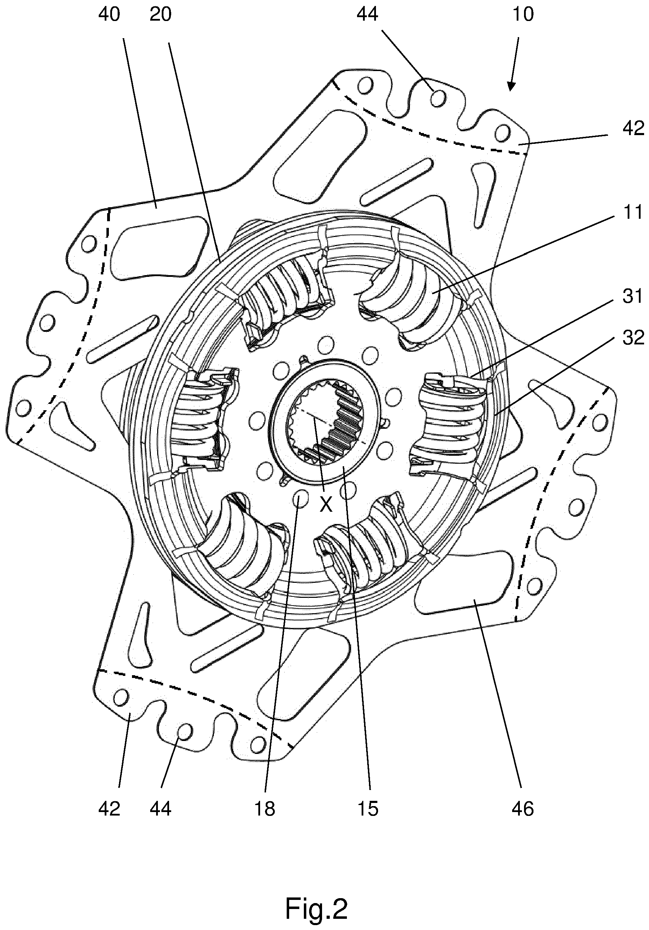

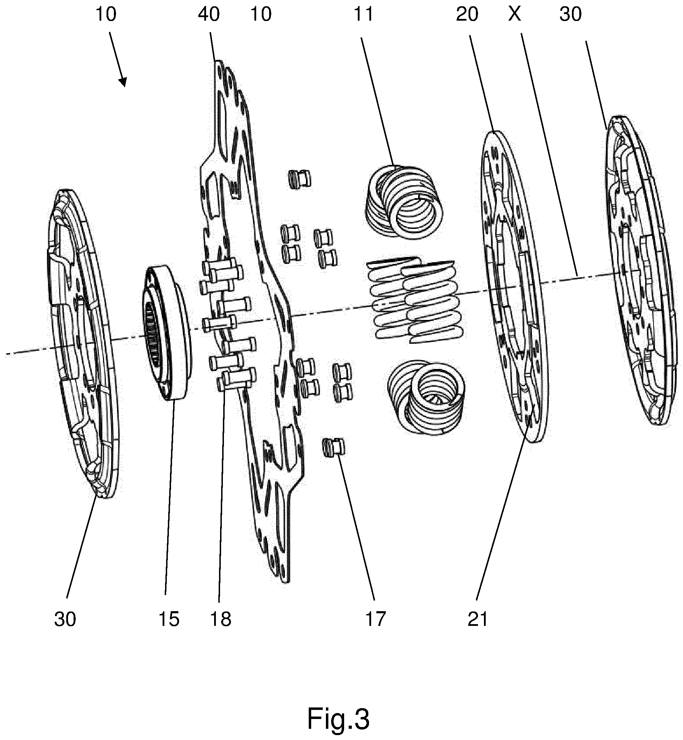

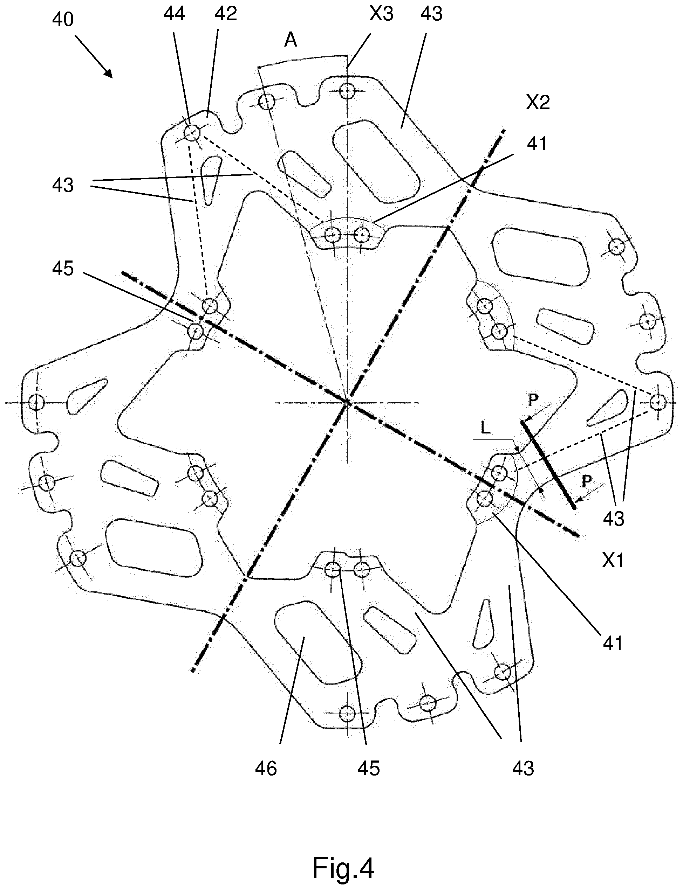

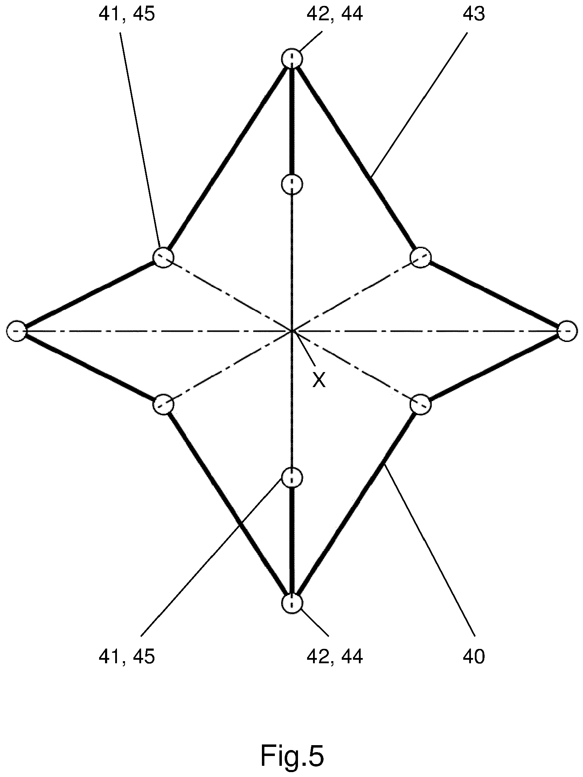

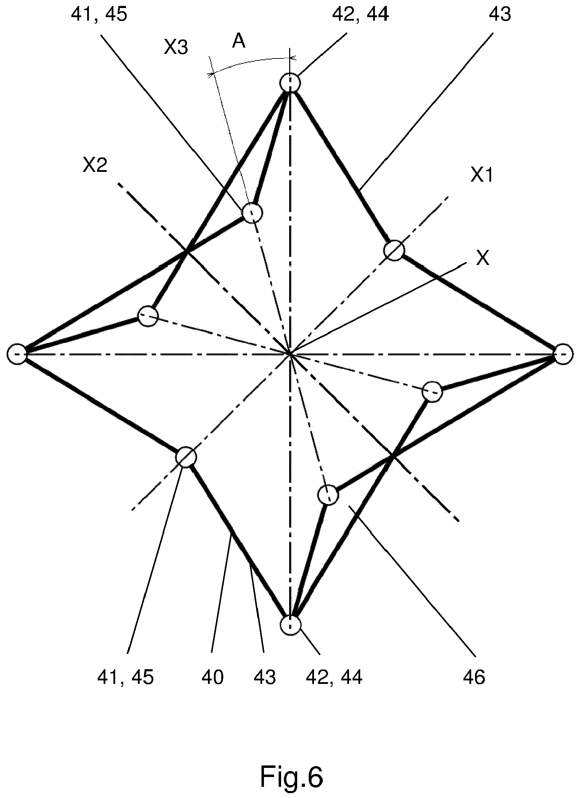

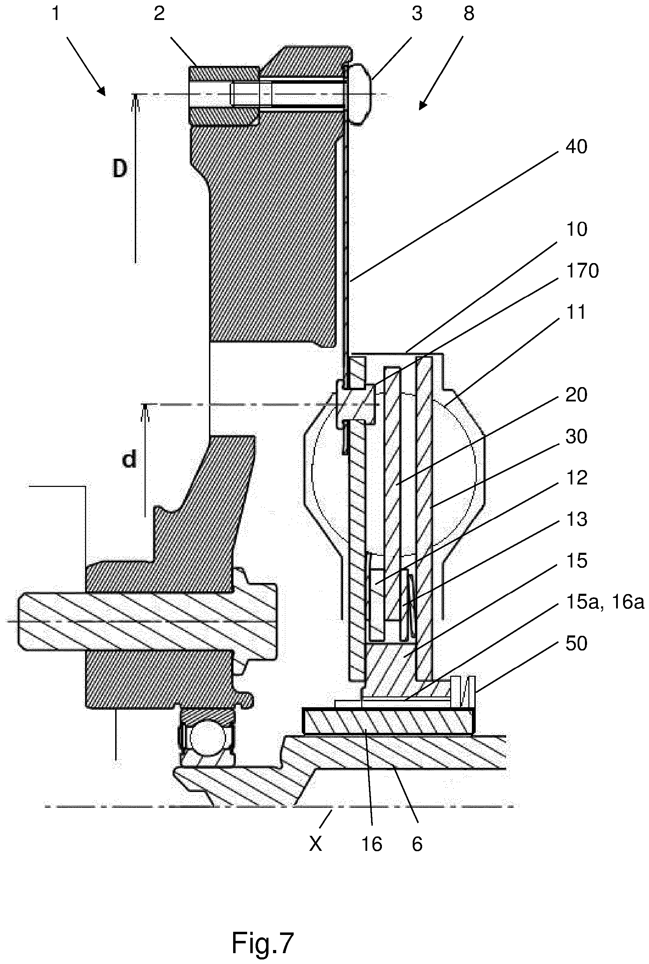

L'invention sera mieux comprise à la lecture de la description qui va suivre, donnée uniquement à titre d'exemple et faite en se référant aux dessins annexés dans lesquels :
- la figure [Fig. 1] est une vue en coupe axiale d'une transmission d'engin motorisé intégrant un dispositif d'amortissement vibratoire selon un premier mode de mise en œuvre de l'invention;
- la figure [Fig. 2] est une vue isométrique du dispositif d'amortissement vibratoire selon le premier mode de mise en œuvre de l'invention de la figure 1 ;
- la figure [Fig. 3] est une vue isométrique en éclaté du dispositif d'amortissement vibratoire selon le premier mode de mise en œuvre de l'invention de la figure 1 ;
- la figure [Fig. 4] est une vue de face d'un disque de reprise des désalignements axiaux selon le premier mode de mise en œuvre de l'invention de la figure 1 ;
- la figure [Fig. 5] est une vue de face schématique d'un disque de reprise des désalignements axiaux selon un deuxième mode de mise en œuvre de l'invention ;
- la figure [Fig. 6] est une vue de face schématique d'un disque de reprise des désalignements axiaux selon un troisième mode de mise en œuvre de l'invention ;
- la figure [Fig. 7] est une vue en coupe axiale d'une transmission d'engin motorisé intégrant un dispositif d'amortissement vibratoire selon un quatrième mode de mise en œuvre de l'invention.

Dans la suite de la description et des revendications, on utilisera à titre non limitatif et afin d'en faciliter la compréhension, les termes « avant » ou « arrière » selon la direction par rapport à une orientation axiale déterminée par l'axe X principal de rotation de la transmission du véhicule automobile et les termes « intérieur / interne » ou « extérieur / externe » par rapport à l'axe X et suivant une orientation radiale, orthogonale à ladite orientation axiale.

La figure 1 illustre une transmission 1 d'engin motorisé de type véhicule industriel intégrant le dispositif d'amortissement vibratoire 10 selon un premier mode de mise en œuvre de l'invention.

Le véhicule industriel comprend notamment un moteur thermique, une boite de vitesses intégrant une machine électrique tournante non représentée et un sous-ensemble 8 de transmission intercalé entre le moteur thermique et la boite de vitesses. Le sous-ensemble 8 de transmission comprend :
- un volant d'inertie 2,
- le dispositif d'amortissement vibratoire 10 fixé sur le volant d'inertie 2, et des vis de fixation 3 insérées dans le dispositif d'amortissement vibratoire et vissées sur le volant d'inertie.

Le sous-ensemble 8 de transmission présente l'avantage de pouvoir être préassemblé en usine sous forme de kit avant sa livraison au client.

Le dispositif d'amortissement vibratoire 10 comprend un voile de transmission de couple 20 de forme annulaire autour d'un axe de rotation X lié en rotation avec le volant d'inertie, des éléments de guidage 30 et des ressorts hélicoïdaux de compression 11. Les deux éléments de guidage 30, autrement appelés rondelles de guidage 30, sont disposées de part et d'autre du voile de transmission de couple 20 en emprisonnant dans des logements intercalaires les ressorts hélicoïdaux de compression 11. Cette architecture de dispositif d'amortissement vibratoire 10 est dites « symétrique » car le couple moteur entre d'abord dans le dispositif d'amortissement vibratoire par le voile de transmission de couple 20.

Comme illustré sur les figures 2 et 3, les parties coaxiales 20 et 30 sont montées rotatives l'une par rapport à l'autre à l'encontre de moyens amortisseurs comportant, ici, des ressorts hélicoïdaux de compression 11. L'appui des ressorts hélicoïdaux de compression 11 se fait directement sur les fenêtres 21 du voile de transmission de couple 20 et sur les fenêtres 31 des rondelles de guidage 30.

Les extrémités des ressorts hélicoïdaux de compression 11 sont destinées à venir s'appuyer sur les bords latéraux des fenêtres 21, 31 du voile annulaire 20 et des rondelles de guidage 30. Les ressorts hélicoïdaux de compression 11 sont répartis circonférentiellement autour de l'axe X.

Lorsque le couple du moteur traverse le dispositif d'amortissement vibratoire 10, le débattement angulaire entre les éléments de guidage 30 et le voile de transmission de couple 20 varie et entraine la compression des ressorts hélicoïdaux de compression 11.

Chaque rondelle de guidage 30 est formée d'une tôle emboutie d'épaisseur globalement constante et comporte des fenêtres 31 de réception de ressorts 11 ainsi qu'une partie annulaire externe 32 adaptée pour guider les ressorts 11 lors du débattement angulaire du voile annulaire 20 par rapport aux rondelles de guidage 30.

Des moyens de frottement 12, 13 sont en outre disposés entre chacune des rondelles de guidage 30 et le voile de transmission de couple 20.

Les ressorts hélicoïdaux de compression 11 et les moyens de frottement 12, 13 permettent, comme cela est connu en soi, d'absorber et d'amortir les vibrations et les acyclismes de rotation en provenance du moteur thermique.

Dans une variante non illustrée, l'appui des ressorts hélicoïdaux de compression 11 peut se faire indirectement sur les fenêtres 21 du voile de transmission de couple 20 et sur les fenêtres 31 des rondelles de guidage 30 par l'intermédiaire de moyens d'interfaçage disposés sur les deux parties coaxiales 20 et 30. Plus précisément, les moyens d'interfaçage comprennent des sièges de ressort placés aux extrémités des ressorts 11, d'une part, et, d'autre part, des évidements formés dans les éléments de guidage 30 et dans le voile de transmission de couple 20. Les sièges de ressort sont aptes à coopérer avec les évidements formés dans les éléments de guidage 30 et/ou le voile de transmission de couple 20 selon une liaison pivot.

Selon l'invention, le dispositif d'amortissement vibratoire 10 comprend un disque 40 de reprise des désalignements axiaux rapporté sur le voile de transmission de couple 20. Les vis de fixation 3 vissées sur le volant d'inertie 2 applique un effort de serrage sur le disque 40 de reprise des désalignements axiaux de manière à transmettre le couple produit par le moteur en direction de la boîte de vitesses.

Le couple moteur entre dans le dispositif d'amortissement vibratoire 10 par l'intermédiaire du disque 40 de reprise des désalignements axiaux et ressort par l'intermédiaire d'un moyeu 15 de sortie de couple disposé entre les deux rondelles de guidage 30. Le moyeu 15 de sortie de couple est raccordé aux rondelles de guidage 30 par des rivets 18. Le moyeu 15 disposé en position centrale du dispositif d'amortissement vibratoire 10 est monté sur l'arbre mené 6 de la boîte de vitesse (non représenté) et transmet le couple moteur par des cannelures 15a formées sur son alésage intérieur.

Lors de chaque rotation du moteur, le vilebrequin transmet au dispositif d'amortissement vibratoire 10 des vibrations axiales et/ou de flexion par l'intermédiaire du volant d'inertie. Les débattements mesurés sur la périphérie externe du volant d'inertie peuvent alors atteindre des valeurs crêtes - crêtes de l'ordre de plusieurs millimètres.

De plus, a l'issu de l'assemblage de la transmission de l'engin motorisé, des décalages axiaux et angulaires peuvent exister entre l'arbre de sortie du moteur thermique et l'arbre d'entrée de la boite de vitesses. Les décalages axiaux et angulaires mesurés entre les arbres peuvent alors atteindre des valeurs de l'ordre d'un millimètre et/ou d'un degré.

L'objet principal de l'invention est donc de fournir un dispositif d'amortissement vibratoire comprenant un disque 40 de reprise des désalignements axiaux perfectionné capable de compenser les tolérances axiales et angulaires ainsi que d'amortir les débattements axiaux du volant d'inertie. Un disque 40 de reprise des désalignements axiaux assoupli permet au moyen 15 de sortie de couple de se conformer plus facilement à la position de l'arbre mené 6 de la boite de vitesses.

Nous allons maintenant décrire plus en détail l'agencement du disque 40 de reprise des désalignements axiaux, selon un des modes préférés de mise en œuvre de l'invention, en référence aux figures 1 à 4.

Comme illustré sur la figure 2, le disque 40 de reprise des désalignements axiaux comprend un nombre pair de zones d'ancrage 42 uniformément réparties angulairement autour de l'axe X, plus précisément quatre zones d'ancrage 42 uniformément réparties angulairement autour de l'axe X selon un angle de 90 degrés. Les quatre zones d'ancrage 42 sont repérées à titre illustratif par les traits pointillés correspondant sensiblement à la zone d'appui sur le volant d'inertie 2.

Dans cet exemple, chacune des zones d'ancrage 42 du disque 40 comprend plusieurs orifices d'ancrage 44 décalés angulairement entre eux autour de l'axe X. Chaque zone d'ancrage comprend trois orifices d'ancrage 44 décalés angulairement par un angle de 15 degrés par rapport à l'axe X.

Selon d'autres exemples possibles, les orifices d'ancrage d'une même zone d'ancrage peuvent être décalés angulairement entre eux par un angle compris entre 10 et 45 degrés autour de l'axe X.

Comme illustré sur la figure 4, le disque 40 de reprise des désalignements axiaux comprend un nombre pair de zones de fixation 41 uniformément réparties angulairement autour de l'axe X, plus précisément six zones de fixation 41 uniformément réparties angulairement autour de l'axe X selon un angle de 60 degrés.

Les six zones de fixation 41 sont en appui sur le voile de transmission de couple 20 et chacune des zones de fixation 41 du disque 40 comprend deux orifices de fixation 45.

Dans cet exemple, le nombre de zones d'ancrage 42 est inférieur au nombre de zones de fixation 41.

Le voile 20 de transmission de couple comprend des fenêtres 21 de réception de ressorts hélicoïdaux de compression 11, les zones de fixation 41 du disque sont réparties angulairement entre chaque fenêtre 21 de réception. De cette manière, la répartition des contraintes mécaniques au sein du disque est sensiblement uniforme sur le pourtour du voile de transmission de couple.

Afin d'assouplir axialement le disque 40 de reprise des désalignements axiaux, chaque zone d'ancrage 42 est raccordée à au moins deux zones de fixation par des bras de liaison 43 distincts. Les bras de liaison 43 sont distincts les uns des autres et transmettent le couple au voile de transmission de couple 20 de manière indépendante.

Les bras de liaison 43 issus de différents orifices d'ancrage 44 peuvent se croiser et s'enchevêtrer. Le disque 40 comprend notamment des crevés 46 formés par l'enchevêtrement des bras de liaison qui assouplissent le dispositif d'amortissement vibratoire. Les zones d'ancrage 42 du disque associées au volant d'inertie 2 sont disposées sur un diamètre d'implantation D supérieur au diamètre d'implantation d des zones de fixation 41 associées au voile de transmission de couple 20.

Comme illustré sur la figure 3, le disque 40 de reprise des désalignements axiaux est fixé sur le voile de transmission de couple 20 par l'intermédiaire d'une liaison rivetée comprenant une série de rivets 17 disposés dans les orifices de fixation 45 du disque et dans les trous 25 correspondant du voile de transmission de couple. En variantes non représentées, le disque de reprise des désalignements axiaux peut être fixé sur le voile de transmission de couple par l'intermédiaire d'une liaison vissée ou soudée par points.

Dans cet exemple, une des zones d'ancrage 42 du disque associée au volant d'inertie 2 est décalée d'un angle A de 15 degrés par rapport à un axe X3 passant par deux zones de fixation 41 opposées angulairement par rapport à l'axe de rotation X. Le décalage de 15 degrés de cet axe X3 a pour effet d'augmenter le nombre de bras de liaison 43 et d'augmenter la capacité de transmission de couple du disque 40. Cet effet est également présent lorsque l'angle A est compris entre 5 et 25 degrés.

Le disque 40 de reprise des désalignements axiaux comprend également, dans un plan P' perpendiculaire à l'axe X, deux axes X1, X2 de raideur minimale en flexion, les axes X1, X2 de raideur minimale en flexion étant perpendiculaires entre eux et l'un des deux axes X1 passant par deux zones de fixation 41 opposées angulairement par rapport à l'axe de rotation X. L'axe X1 n'est pas confondu avec l'axe X3. Les axes X1, X2 de raideur minimale en flexion correspondent à des axes privilégiés autour desquels le disque 40 peut se déformer en flexion plus facilement. La raideur peut être mesurée en appliquant une charge en Newton selon une direction perpendiculaire au plan P' sur la périphérie du disque, par exemple au niveau des zones d'ancrage 42. La raideur est mesurée sur le disque 40 de reprise des désalignements axiaux seul, c'est-à-dire non assemblé sur le dispositif d'amortissement vibratoire.

De manière avantageuse, le disque 40 de reprise des désalignements axiaux comprend, dans un plan perpendiculaire à l'axe de rotation X, deux axes X1, X2 de symétrie perpendiculaires entre eux. Les deux axes X1, X2 de symétrie perpendiculaires entre eux correspondant aux axes de raideur minimale en flexion.

Comme illustré sur la figure 4, la raideur du disque selon l'axe X1 de raideur minimale en flexion est inférieure à la raideur du disque selon l'axe X2 de raideur minimale en flexion.

Le disque 40 présente une géométrie de forme homogène régulièrement répartie autour de l'axe X. La répartition des contraintes mécaniques au sein du disque 40 est sensiblement uniforme sur le pourtour du voile de transmission de couple 20.

Chaque bras de liaison 43 comprend dans un plan P parallèle à l'axe X une section de matière d'épaisseur E et de largeur L telle que le ratio L / E est supérieur à 10.

Le disque 40 de reprise des désalignements axiaux est réalisé de préférence dans une tôle d'acier dont l'épaisseur peut être variable. Selon une variante, le bras de liaison 43 peut comprendre une épaisseur E variable sur tout ou partie de l'étendue du bras de liaison et/ ou une largeur L variable sur tout ou partie de l'étendue du bras de liaison.

On va maintenant décrire en référence à la figure 5, un disque 40 de reprise des désalignements axiaux selon un deuxième mode de mise en œuvre de l'invention dans lequel chaque zone d'ancrage 42 du disque comprend un seul orifice d'ancrage 44 et chacune des zones de fixation 41 comprend un seul orifice de fixation 45.

Dans ce deuxième mode de mise en œuvre de l'invention, certaines zones d'ancrage 42 sont raccordées à trois zones de fixation 41 par trois bras de liaison 43 distincts, les bras de liaison 43 issus d'une même zone d'ancrage 42 s'étendent dans des directions angulaires distinctes de manière à rejoindre leurs zones de fixation 41 correspondantes. Egalement, d'autres zones d'ancrage 42 sont raccordées à deux zones de fixation 41 par des bras de liaison 43 distincts, les bras de liaison 43 issus d'une même zone d'ancrage 42 s'étendent dans des directions angulaires distinctes de manière à rejoindre leurs zones de fixation correspondantes. Dans ce deuxième mode de mise en œuvre de l'invention, les bras de liaison 43 ne s'enchevêtrent pas.

On va maintenant décrire en référence à la figure 6, un disque 40 de reprise des désalignements axiaux selon un troisième mode de mise en œuvre de l'invention dans lequel chaque zone d'ancrage 42 du disque comprend un seul orifice d'ancrage 44 et chacune des zones de fixation 41 comprend un seul orifice de fixation 45. Ce troisième mode de mise en œuvre de l'invention se distingue du deuxième par le fait que toutes les zones d'ancrage 42 sont raccordées à trois zones de fixation 41 par trois bras de liaison 43 distincts, les bras de liaison 43 issus d'une même zone d'ancrage 42 s'étendent dans des directions angulaires distinctes de manière à rejoindre leurs zones de fixation 41 correspondantes.

Comme illustré sur la figure 6, le disque 40 de reprise des désalignements axiaux comprend un nombre pair d'orifices d'ancrage 44 uniformément réparties angulairement autour de l'axe X, plus précisément quatre orifices d'ancrage 44 uniformément réparties angulairement autour de l'axe X selon un angle de 90 degrés.

Le disque 40 de reprise des désalignements axiaux comprend également un nombre pair de orifices de fixation 45 uniformément réparties angulairement autour de l'axe X, plus précisément six zones de fixation 41 uniformément réparties angulairement autour de l'axe X selon un angle de 60 degrés.

Dans cet exemple, le nombre d'orifices d'ancrage 44 est inférieur au nombre d'orifices de fixation 45.

Afin d'assouplir axialement le disque 40 de reprise des désalignements axiaux, chaque orifice d'ancrage 44 est raccordée à trois orifices de fixation 45 par des bras de liaison 43 distincts. Les bras de liaison 43 sont distincts les uns des autres et transmettent le couple au voile de transmission de couple 20 ou à l'un des éléments de guidage 30 de manière indépendante.

Les bras de liaison 43 issus de différents orifices d'ancrage 44 peuvent se croiser et s'enchevêtrer. Le disque 40 comprend notamment des crevés 46 formés par l'enchevêtrement des bras de liaison qui assouplissent le dispositif d'amortissement vibratoire. Les orifices d'ancrage 44 du disque associés au volant d'inertie 2 sont disposées sur un diamètre d'implantation D supérieur au diamètre d'implantation d des orifices de fixation 45 associés au voile.

Dans cet exemple, une des zones d'ancrage 42 du disque associées au volant d'inertie 2 est décalée d'un angle A de 15 degrés par rapport à un axe X3 passant par deux zones de fixation 41 opposées angulairement par rapport à l'axe de rotation X. Le décalage de 15 degrés de cet axe X3 a pour effet d'augmenter le nombre de bras de liaison 43 et d'augmenter la capacité de transmission de couple du disque 40.

Le disque 40 de reprise des désalignements axiaux comprend également, dans un plan perpendiculaire à l'axe X, deux axes X1, X2 de raideur minimale en flexion, les axes X1, X2 de raideur minimale en flexion étant perpendiculaires entre eux et l'un des deux axes X1 passe par deux zones de fixation 41 opposées angulairement par rapport à l'axe de rotation X. L'axe X1 n'est pas confondu avec l'axe X3.

L'invention n'est pas limitée aux exemples de mise en œuvre de l'invention qui viennent d'être décrit. La figure 7 illustre un quatrième mode de mise en œuvre de l'invention dans lequel le dispositif d'amortissement vibratoire 10 présente une architecture dites « dissymétrique ». Dans cet exemple, le voile 40 de reprise des désalignements axiaux est rapporté sur un des éléments de guidage 30 par l'intermédiaire de zones de fixation 41 réparties angulairement autour de l'axe X et agencé pour être fixé sur le volant d'inertie 2 par l'intermédiaire de zones d'ancrage 42 réparties angulairement autour de l'axe X.

Dans ce quatrième mode de mise en œuvre de l'invention, chaque zone d'ancrage 42 est raccordée à au moins deux zones de fixation par des bras de liaison 43 distincts.

Le dispositif d'amortissement vibratoire 10 comprend un voile de transmission de couple 20 de forme annulaire autour d'un axe de rotation X, des éléments de guidage 30 et des ressorts hélicoïdaux de compression 11. Les deux éléments de guidage 30, autrement appelés rondelles de guidage 30, sont disposées de part et d'autre du voile de transmission de couple 20 en emprisonnant dans des logements intercalaires les ressorts hélicoïdaux de compression 11. Cette architecture de dispositif d'amortissement vibratoire 10 est dites « dissymétrique » car le couple moteur entre d'abord dans le dispositif d'amortissement vibratoire par l'un des deux éléments de guidage 30.

Dans cet exemple, le disque 40 de reprise des désalignements axiaux présentent des caractéristiques similaires à celles décrites dans le premier mode de mise en œuvre de l'invention. Ainsi le disque 40 comprend des zones d'ancrage 42 et des zones de fixations 41. Afin d'assouplir axialement le disque 40 de reprise des désalignements axiaux, chaque zone d'ancrage 42 est raccordée à au moins deux zones de fixation par des bras de liaison 43 distincts. Les bras de liaison 43 sont distincts les uns des autres et transmettent le couple à l'un des éléments de guidage 30 de manière indépendante.

Le disque 40 de reprise des désalignements axiaux est fixé sur l'élément de guidage 30 par l'intermédiaire d'une liaison rivetée comprenant une série de rivets 170 disposés dans les orifices de fixation 45 du disque et dans les trous correspondant de l'élément de guidage 30.

Le quatrième mode de mise en œuvre de l'invention se distingue également par la présence d'un dispositif additionnel de reprise des désalignements comprenant un moyeu central 16 inséré dans le moyeu 15 de sortie de couple et au moins un sous-ensemble de frottement 50 lié cinématiquement conjointement aux deux moyeux. Un jeu radial spécifique est implémenté entre la cannelure interne 15a du moyeu 15 de sortie de couple et la cannelure externe 16a du moyeu central 16. Ce jeu radial permet de compenser les différences de position entre l'arbre de sortie lié au moteur thermique et l'arbre d'entrée lié à la boîte de vitesses, tout en assurant la transmission du couple.

Le sous-ensemble de frottement 50 comprend au moins une rondelle de frottement dont la fonction est d'atténuer les micro-mouvements entre le moyeu central 16 et le moyeu 15 de sortie de couple.

L'invention n'est pas limitée à son utilisation dans une transmission de véhicule industriel comme décrite précédemment. Le dispositif d'amortissement vibratoire 10 peut également être intégré à une transmission d'engin motorisé dites « classique » ne comprenant pas de machine électrique tournante.

## Revendications

1. Dispositif d'amortissement vibratoire (10) pour une transmission d'engin motorisé, comprenant :
- un voile de transmission de couple (20) ;
- deux éléments de guidage (30) liés en rotation, coaxiaux suivant un axe de rotation (X) et disposés de part et d'autre dudit voile de transmission de couple (20) ;
- des ressorts hélicoïdaux de compression (11) en appui directement ou indirectement sur le voile de transmission de couple et les éléments de guidage ;
dans lequel un disque (40) de reprise des désalignements axiaux de la transmission est rapporté sur le voile de transmission de couple (20) ou sur l'un des éléments de guidage (30) par l'intermédiaire de zones de fixation (41) réparties angulairement autour de l'axe (X) et agencé pour être fixé sur un volant d'inertie par l'intermédiaire de zones d'ancrage (42) réparties angulairement autour de l'axe (X) ; **caractérisé en ce que** chaque zone d'ancrage (42) est raccordée à au moins deux zones de fixation (41) par des bras de liaison (43) distincts.

2. Dispositif d'amortissement vibratoire (10) selon la revendication 1, **caractérisé en ce que** les bras de liaison (43) issus d'une même zone d'ancrage (42) s'étendent dans des directions angulaires distinctes de manière à rejoindre leurs zones de fixation (41) correspondantes.

3. Dispositif d'amortissement vibratoire (10) selon la revendication 1 ou 2, **caractérisé en ce que** le disque comprend six zones de fixation (41) uniformément réparties angulairement autour de l'axe (X) selon un angle de 60 degrés et quatre zones d'ancrage (42) uniformément réparties angulairement autour de l'axe (X) selon un angle de 90 degrés.

4. Dispositif d'amortissement vibratoire (10) selon l'une des revendications 1 à 3, **caractérisé en ce que** le disque (40) comprend des crevés (46) formés par l'enchevêtrement des bras de liaison (43).

5. Dispositif d'amortissement vibratoire (10) selon l'une des revendications 1 à 4, **caractérisé en ce que** le disque (40) comprend, dans un plan (P') perpendiculaire à l'axe (X), deux axes (X1, X2) de raideur minimale en flexion, les axes (X1, X2) de raideur minimale en flexion étant perpendiculaires entre eux et l'un des deux axes (X1, X2) passant par deux zones de fixation (41) opposées angulairement par rapport à l'axe de rotation (X).

6. Dispositif d'amortissement vibratoire (10) selon la revendication précédente, **caractérisé en ce que** le disque (40) comprend, dans un plan perpendiculaire à l'axe de rotation (X), deux axes (X1, X2) de symétrie perpendiculaires entre eux correspondant aux axes de raideur minimale en flexion.

7. Dispositif d'amortissement vibratoire (10) selon l'une des revendications 1 à 6, **caractérisé en ce qu'**une des zones d'ancrage (42) du disque (40) associée au volant d'inertie est décalée d'un angle (A) compris entre 5 et 25 degrés par rapport à un axe (X3) passant par deux zones de fixation (41) opposées angulairement par rapport à l'axe de rotation (X), par exemple décalée d'un angle de 15 degrés.

8. Dispositif d'amortissement vibratoire (1) selon l'une des revendications 1 à 7, **caractérisé en ce que** les zones d'ancrage (42) du disque (40) associées au volant d'inertie sont disposées sur un diamètre d'implantation (D) supérieur au diamètre d'implantation (d) des zones de fixation (41) associées au voile de transmission de couple (20) ou à l'un des éléments de guidage (30).

9. Dispositif d'amortissement vibratoire (10) selon l'une des revendications 1 à 8, **caractérisé en ce que** les bras de liaison (43) comprennent au moins en partie dans un plan (P) parallèle à l'axe (X) une section de matière d'épaisseur (E) et de largeur (L) telle que le ratio L / E est supérieur à 10.

10. Dispositif d'amortissement vibratoire (10) selon l'une des revendications 1 à 9, **caractérisé en ce que** chacune des zones de fixation (41) du disque comprend au moins un orifice de fixation (45), par exemple deux orifices de fixation (45).

11. Dispositif d'amortissement vibratoire (10) selon la revendication 10, **caractérisé en ce que** le disque (40) est fixé sur le voile de transmissions de couple (20) par l'intermédiaire d'une liaison rivetée comprenant une série de rivets (17) disposés dans les orifices de fixation (45) du disque et dans des trous (25) correspondant du voile de transmission de couple (20).

12. Dispositif d'amortissement vibratoire (10) selon l'une des revendications 1 à 11, **caractérisé en ce que** le voile de transmission de couple (20) comprend des fenêtres (21) de réception de ressorts hélicoïdaux de compression (11), les zones de fixation (41) du disque (40) étant réparties angulairement entre chaque fenêtre (21) de réception.

13. Dispositif d'amortissement vibratoire (10) selon l'une des revendications 1 à 12, **caractérisé en ce que** chaque zone d'ancrage (42) du disque comprend trois orifices d'ancrage (44), les orifices d'ancrage (44) d'une même zone d'ancrage (42) sont décalés angulairement entre eux autour de l'axe (X) par un angle de 15 degrés.

14. Dispositif d'amortissement vibratoire (10) selon la revendication 13, **caractérisé en ce que** chaque orifice d'ancrage (44) est raccordé à deux zones de fixation (41) par des bras de liaison (43) distincts, les bras de liaison (43) issus d'un même orifice d'ancrage s'étendent dans des directions angulaires distinctes de manière à rejoindre leurs zones de fixation (41) correspondantes.

15. Dispositif d'amortissement vibratoire (10) selon l'une des revendications précédentes, comprenant un moyeu (15) de sortie de couple disposé radialement à l'intérieur du voile de transmission de couple (20) et des deux éléments de guidage (30), un dispositif additionnel de reprise des désalignements comprenant un moyeu central (16) inséré dans le moyeu (15) de sortie de couple et au moins un sous-ensemble de frottement (50) lié cinématiquement conjointement aux deux moyeux (15, 16).

16. Sous-ensemble (8) de transmission pour une transmission (1) d'engin motorisé, comprenant :
- un volant d'inertie (2),
- un dispositif d'amortissement vibratoire (10) selon l'une quelconque des revendications précédentes, fixé sur le volant d'inertie (2), et
- des vis de fixation (3) insérées dans les zones d'ancrage (42) du dispositif d'amortissement vibratoire et vissées sur le volant d'inertie.
